(19) Europäisches Patentamt
European Patent Office
Office européen des brevets

(11) **EP 2 934 972 B1**

(12) **EUROPÄISCHE PATENTSCHRIFT**

(45) Veröffentlichungstag und Bekanntmachung des Hinweises auf die Patenterteilung:
**08.02.2017 Patentblatt 2017/06**

(21) Anmeldenummer: **13795791.6**

(22) Anmeldetag: **28.11.2013**

(51) Int Cl.:
**B60T 13/66** *(2006.01)*     **B60T 13/74** *(2006.01)*
**B60T 7/12** *(2006.01)*     **B60T 8/32** *(2006.01)*

(86) Internationale Anmeldenummer:
**PCT/EP2013/074924**

(87) Internationale Veröffentlichungsnummer:
**WO 2014/095284 (26.06.2014 Gazette 2014/26)**

(54) **VERFAHREN UND BAUGRUPPE ZUR BREMSKRAFTVERSTÄRKUNG FÜR EINE ELEKTROHYDRAULISCHE KRAFTFAHRZEUG-BREMSANLAGE**

METHOD AND ASSEMBLY FOR BOOSTING THE BRAKE FORCE OF AN ELECTROHYDRAULIC MOTOR VEHICLE BRAKE SYSTEM

PROCÉDÉ ET ENSEMBLE D'ASSISTANCE AU FREINAGE POUR UN SYSTÈME DE FREINAGE ÉLECTROHYDRAULIQUE D'UN VÉHICULE AUTOMOBILE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **21.12.2012 DE 102012025292**

(43) Veröffentlichungstag der Anmeldung:
**28.10.2015 Patentblatt 2015/44**

(73) Patentinhaber: **Lucas Automotive GmbH
56070 Koblenz (DE)**

(72) Erfinder: **KNECHTGES, Josef
56727 Mayen (DE)**

(74) Vertreter: **Röthinger, Rainer
Wuesthoff & Wuesthoff
Patentanwälte PartG mbB
Schweigerstrasse 2
81541 München (DE)**

(56) Entgegenhaltungen:
**DE-A1-102004 016 141     DE-A1-102011 081 461**

## Beschreibung

### Technisches Gebiet

Die vorliegende Offenbarung betrifft allgemein das Gebiet der Kraftfahrzeug-Bremsanlagen. Konkret werden ein Verfahren sowie eine elektrohydraulische Betätigungsbaugruppe zur Bremskraftverstärkung bei einer derartigen Bremsanlage beschrieben.

### Hintergrund

Bei einer elektrohydraulischen Bremsanlage wird der Bremswunsch eines Fahrers üblicherweise mittels eines Sensors im Bereich eines Bremspedals erfasst und in ein elektrisches Signal umgewandelt. Das elektrische Signal wird einem Steuergerät zugeführt, das auf der Grundlage des Signals dann einen elektrischen Bremsdruckgeber mit einem elektromechanischen Aktuator zur Bremskrafterzeugung oder Bremskraftunterstützung ansteuert.

Eine derartige Bremsanlage wird als "Brake-By-Wire"-System bezeichnet, wenn die Bremskraft ausschließlich durch den elektrischen Bremsdruckgeber erzeugt wird. Wird die vom Fahrer erzeugte Bremskraft hingegen lediglich mittels des elektrischen Bremsdruckgebers erhöht, spricht man von elektrohydraulischer Bremskraftverstärkung.

Um das Fahrzeug auch bei einem Fehler oder Ausfall der Fahrzeugelektrik noch abbremsen zu können, weist ein "Brake-By-Wire"-System in der Regel eine redundante hydraulische Notbremsfunktionalität auf (vgl. DE 10 2004 016 141 A1). Hierbei wird in einem Rückfall-Modus die vom Fahrer am Bremspedal erzeugte Betätigungskraft mittels eines mechanischen Durchgriffs unmittelbar auf einen Hauptbremszylinder der Bremsanlage übertragen. Auf diese Weise entsteht eine direkte Verbindung zwischen dem Bremspedal und den Radbremsen des Kraftfahrzeugs. Der Rückfall-Modus wird aufgrund des mechanischen Durchgriffs auch als "Push-Through"-Betrieb bezeichnet.

Im Rückfall-Modus eines "Brake-By-Wire"-Systems unterbleibt eine Ansteuerung des elektrischen Bremsdruckgebers. Die Fahrzeugverzögerung muss daher allein mit der (unverstärkten) Betätigungskraft am Bremspedal erfolgen. Insbesondere bei schweren Fahrzeugen führt dies zu übermäßig langen Bremswegen.

In der Praxis hat sich herausgestellt, dass bereits ein einfacher Fehler des Sensors zur Bremswunscherkennung zu einer Deaktivierung des elektrischen Bremsdruckgebers führen kann. Obwohl der elektrische Bremsdruckgeber als solches daher noch betriebsfähig wäre, muss in diesen Fällen das Fahrzeug allein durch die Betätigungskraft am Bremspedal abgebremst werden. Dies gilt sowohl für "Brake-By-Wire"-Systeme als auch für elektrohydraulische Bremskraftverstärkungssysteme mit permanentem mechanischen Durchgriff.

Die DE 10 2011 081461 A1 offenbart eine Bremsanlage für Kraftfahrzeuge mit einem mittels eines Bremspedals betätigbaren Hauptbremszylinder, an den Radbremsen angeschlossen sind, einer elektrisch steuerbaren Druckbereitstellungseinrichtung, einer Druckregelventilanordnung zur Regelung und/oder Steuerung eines an einer Radbremse eingesteuerten Radbremsdruckes und einer ersten elektronischen Steuer- und Regeleinheit, welche die Druckbereitstellungseinrichtung und/oder die Druckregelventilanordnung steuert oder regelt, die mit einer vom Funktionieren der Druckbereitstellungseinrichtung unabhängigen Bremskraftunterstützung ausgestattet werden soll. Dazu umfasst diese eine elektrisch steuerbare Zusatzdruckbereitstellungsvorrichtung, mittels welcher der Hauptbremszylinder betätigbar ist, insbesondere mittels welcher ein Druck in einem Zwischenraum des Hauptbremszylinders Steueroder regelbar ist.

### Kurzer Abriss

Es ist daher eine Technik zur Bremskraftverstärkung für eine elektrohydraulische Kraftfahrzeug-Bremsanlage anzugeben, die auch in einem Modus, in dem mittels eines mechanischen Durchgriffs eine Betätigungskraft an einem Bremspedal auf einen Hauptbremszylinder der Bremsanlage einwirkt, zuverlässig eine Bremskraftverstärkung bereitstellen kann.

Gemäß einem Aspekt wird daher ein Verfahren zur Bremskraftverstärkung für eine elektrohydraulische Kraftfahrzeug-Bremsanlage in einem Modus, in dem mittels eines mechanischen Durchgriffs eine Betätigungskraft an einem Bremspedal auf einen Hauptbremszylinder der Bremsanlage einwirkt, angegeben. Das Verfahren umfasst die Schritte des Ermitteins eines Werts einer auf eine aktuelle Fahrzeugverzögerung hinweisenden ersten Größe, des Ermittelns eines Werts einer auf die Betätigungs kraft hinweisenden zweiten Größe auf der Grundlage des Werts der ersten Größe, des Ermitteins einer erforderlichen Bremskraftverstärkung auf der Grundlage des Werts der zweiten Größe und des Ansteuerns eines auf den Hauptbremszylinder einwirkenden elektromechanischen Aktuators zur Erzielung der erforderlichen Bremskraftverstärkung.

Die aktuelle Fahrzeugverzögerung kann auf zwei oder mehr Anteile zurückgehen, insbesondere auf die Betätigungskraft beim Bremspedal und eine aktuelle Bremskraftverstärkung mittels des elektromechanischen Aktuators. Sowohl die Betätigungskraft am Bremspedal als auch die aktuelle Bremskraftverstärkung können hierbei als sich addierende Kraftanteile auf den Hauptbremszylinder einwirken.

Der Wert der zweiten Größe kann aus dem Wert der ersten Größe und der aktuellen Bremskraftverstärkung ermittelt werden. Die aktuelle Bremskraftverstärkung wiederum lässt sich aus der Stromaufnahme des elektromechanischen Aktuators oder anderweitig (beispielsweise aus einem Betätigungsweg oder einer Anzahl von Umdrehungen des elektromechanischen Aktuators) ermitteln. Bei einer zyklischen Durchführung des Verfahrens lässt sich die aktuelle Bremskraftverstärkung für einen aktuellen Zyklus aus für einen vorhergehenden Zyklus ermittelten erforderlichen Bremskraftverstärkung bestimmen.

Dem Ermitteln des Werts der zweiten Größe kann die Annahme eines bekannten Zusammenhangs zwischen der aktuellen Bremskraftverstärkung und der Betätigungskraft zugrunde liegen. In ähnlicher Weise kann dem Ermitteln der erforderlichen Bremskraftverstärkung die Annahme eines bekannten Zusammenhangs zwischen der erforderlichen Bremskraftverstärkung und der zweiten Größe zugrunde liegen. Bei dem bekannten Zusammenhang kann es sich in jedem dieser beiden Fälle um eine bekannte (z.B. lineare) Funktion handeln. Im einfachsten Fall herrscht zwischen der aktuellen bzw. erforderlichen Bremskraftverstärkung einerseits und der Betätigungskraft bzw. zweiten Größe andererseits eine vorgebebene Proportionalität (z.B. n:1).

Die erste Größe kann die Fahrzeugverzögerung - also eine (negative) Beschleunigung -, ein von einem Kolben im Hauptbremszylinder zurückgelegter Weg, ein Hydraulikdruck in der Bremsanlage (z.B. stromabwärts des Hauptbremszylinders) oder eine Gesamtbremskraft (z.B. an einer Radbremse) sein. Die zweite Größe kann die Betätigungskraft selbst, ein auf die Betätigungskraft zurückgehender Hydraulikdruckanteil in der Bremsanlage oder ein auf die Betätigungskraft zurückgehender Bremskraftanteil sein.

Einer oder mehrere der Schritte des hier vorgestellten Verfahrens können wiederholt während eines Bremsvorgangs durchgeführt werden. Beispielsweise lassen sich die Schritte zyklisch derart durchführen, dass die in einem vorhergehenden Zyklus ermittelte erforderliche Bremskraftverstärkung als aktuelle Bremskraftverstärkung für den nächsten Zyklus herangezogen wird.

Der Durchgriff-Modus - und damit das Durchführen eines oder mehrerer Schritte des hier vorgestellten Verfahrens - kann während eines laufenden Bremsvorgangs aktiviert werden. So kann in einer Implementierung der Durchgriff-Modus ein Rückfall-Modus sein (z. B. zur Bereitstellung einer Notbremsfunktionalität bei einem "Brake-By-Wire"-System). Zusätzlich zu diesem Rückfall-Modus kann ein regulärer Betriebsmodus definiert sein, in dem das Bremspedal vom Hauptbremszylinder entkoppelt und eine Bremskraft allein von dem elektromechanischen Aktuator erzeugt wird. Alternativ hierzu kann sich die Bremsanlage permanent in dem Durchgriff-Modus befinden. Mit anderen Worten kann der mechanische Durchgriff (auch) im regulären Betriebsmodus der Kraftfahrzeug-Bremsanlage vorherrschen (beispielsweise bei einem System zur elektrohydraulischen Bremskraftverstärkung).

Ferner angegeben wird ein Computerprogrammprodukt mit Programmcodemitteln zur Durchführung des hier vorgestellten Verfahrens, wenn das Verfahren auf einem Steuergerät abläuft. Auch ein das Computerprogrammprodukt umfassendes Steuergerät wird bereitgestellt. Das Steuergerät kann ferner einen oder mehrere Prozessoren umfassen, auf denen das Computerprogrammprodukt abläuft. Das Computerprogrammprodukt kann im Steuergerät abgespeichert sein.

Schließlich wird eine elektrohydraulische Betätigungsbaugruppe für eine Kraftfahrzeug-Bremsanlage angegeben. Die Betätigungsbaugruppe umfasst einen Hauptbremszylinder, einen elektromechanischen Aktuator (wenigstens) zur Bremskraftverstärkung, wobei der elektromechanische Aktuator auf den Hauptbremszylinder einwirkt, eine Einrichtung, die mittels eines mechanischen Durchgriffs eine Übertragung einer Betätigungskraft an einem Bremspedal auf den Hauptbremszylinder gestattet, und ein Steuergerät. Das Steuergerät ist dazu ausgelegt, einen Wert einer auf eine aktuelle Fahrzeugverzögerung hinweisenden ersten Größe zu ermitteln, einen Wert einer auf die Betätigungskraft hinweisenden zweiten Größe auf der Grundlage des Werts der ersten Größe zu ermitteln, eine erforderliche Bremskraftverstärkung auf der Grundlage des Werts der zweiten Größe zu ermitteln und den elektromechanischen Aktuator zur Erzielung der erforderlichen Bremskraftverstärkung anzusteuern.

Der elektromechanische Aktuator kann unmittelbar oder mittelbar auf den Hauptbremszylinder einwirken. Konkret kann der elektromechanische Aktuator mit einem im Hauptbremszylinder verschiebbar aufgenommenen Kolben mechanisch gekoppelt oder koppelbar sein. Der elektromechanische Aktuator kann dann den Kolben zur Bremskraftverstärkung unmittelbar betätigen. Alternativ hierzu kann der elektromechanische Aktuator mit einer weiteren Zylinder-Kolben-Einrichtung der Bremsanlage zusammenwirken, welche auslassseitig mit dem Hauptbremszylinder fluidisch gekoppelt ist. In diesem Fall kann ein im Hauptbremszylinder verschiebbar aufgenommener Kolben über einen durch die Zylinder-Kolben-Einrichtung (und mit Hilfe des elektromechanischen Aktuators) bereitgestellten Hydraulikdruck hydraulisch betätigt werden.

Die Einrichtung kann zum Betrieb in einem Rückfall-Modus der Betätigungsbaugruppe ausgelegt sein. Ferner kann die Betätigungsbaugruppe dazu eingerichtet sein, in einem regulären Betriebsmodus das Bremspedal vom Hauptbremszylinder zu entkoppeln und eine Bremskraft allein durch den elektromechanischen Aktuator zu erzeugen.

Gemäß einer Implementierung ist die Betätigungsbaugruppe ohne Sensor zur Bremswunscherkennung ausgebildet. Gemäß dieser Implementierung kann permanent ein mechanischer Durchgriff zur Übertragung der Betätigungskraft am Bremspedal auf den Hauptbremszylinder vorliegen, wobei die Bremskraftverstärkung dann additiv auf den Hauptbremszylinder einwirken kann.

## Kurze Beschreibung der Zeichnungen

Weitere Vorteile, Aspekte und Einzelheiten der hier vorgestellten elektrohydraulischen Betätigungsbaugruppe ergeben sich aus der nachfolgenden Beschreibung exemplarischer Ausführungsbeispiele sowie aus den Figuren. Es zeigen:

Fig. 1 ein Ausführungsbeispiel einer Kraftfahrzeug-Bremsanlage mit einer elektrohydraulischen Betätigungsbaugruppe;

Fig. 2 eine schematische Darstellung des Ermittelns der erforderlichen Bremskraftverstärkung zur Ansteuerung eines elektromechanischen Aktuators der Betätigungsbaugruppe gemäß Fig. 1;

Fig. 3 ein Ausführungsbeispiel eines Verfahrens zur Bremskraftverstärkung für die Kraftfahrzeug-Bremsanlage gemäß Fig. 1.

**Detaillierte Beschreibung**

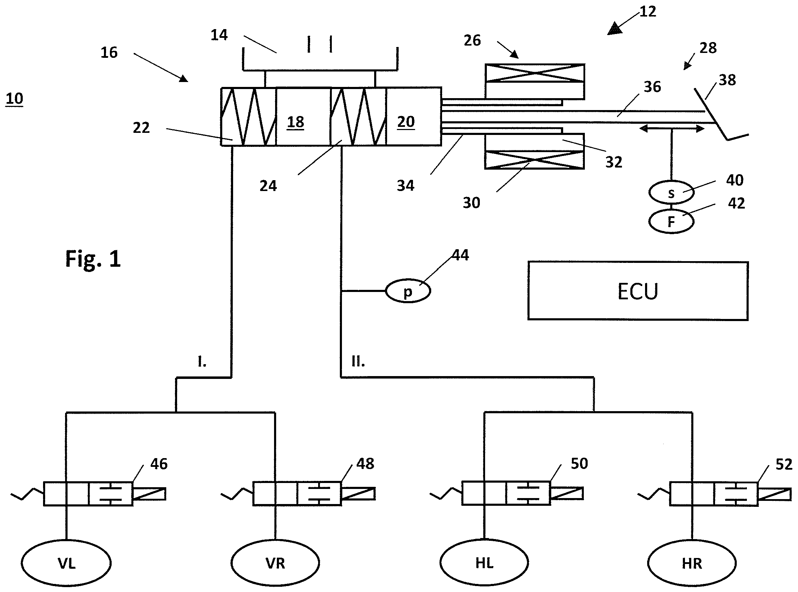

Die in Fig. 1 dargestellte elektrohydraulische Kraftfahrzeug-Bremsanlage 10 umfasst eine elektrohydraulische Betätigungsgruppe 12, die mittels einer Hydraulikflüssigkeit arbeitet. Die Hydraulikflüssigkeit ist zum Teil in einem drucklosen Behälter 14 bevorratet. Der Behälter 14 ist an einen Hauptbremszylinder 16 angeschlossen, in dem das Erzeugen von Bremsdrücken durch unter Druck setzen der Hydraulikflüssigkeit erfolgt. Dazu sind in dem Hauptbremszylinder 16 zwei bewegbare Kolben 18 und 20 als Tandemanordnung aufgenommen, die zwei voneinander getrennte Hydraulikkammern 22 und 24 begrenzen. An Ausgänge der Kammern 22, 24 sind zwei Bremskreise I. und II. angeschlossen, wobei jeder Bremskreis auf zwei von insgesamt vier Radbremsen VL (Vorne Links), VR (Vorne Rechts) und HL (Hinten Links), HR (Hinten Rechts) wirkt.

Je nach dem, welche Radbremse über welchen Bremskreis betätigt wird, ergibt sich eine Vorder-/Hinterachs-Aufteilung, was bedeutet, dass der eine Bremskreis die Radbremsen der Vorderachse und der andere die der Hinterachse betätigt, oder eine diagonale Aufteilung, was bedeutet, dass jeder Bremskreis die Radbremse eines Vorderrades und die des diagonal gegenüberliegenden Hinterrades betätigt. Fig. 1 zeigt exemplarisch eine Vorder-/Hinterachsenaufteilung.

Ein Betätigen des Hauptbremszylinders 16 kann mittels eines elektromechanischen Aktuators 26 (als elektrischem Bremsdruckgeber) und einer mechanischen Stelleinrichtung 28 (als mechanischem Bremsdruckgeber) gemeinsam oder getrennt voneinander erfolgen. Dazu wirken sowohl der elektromechanische Aktuator 26 als auch die mechanische Stelleinrichtung 28 eingangsseitig auf die der Hydraulikkammer 24 gegenüberliegende Stirnseite des Kolbens 20 ein, um die Kolben 18 und 20 (aufgrund ihrer Tandemanordnung) in Längsbewegung zu versetzen.

Alternativ hierzu kann der elektromechanische Aktuator 26 mit einer mit dem Hauptbremszylinder 16 fluidisch gekoppelten Zylinder-Kolben-Einrichtung zusammenwirken, um die Kolben 18, 20 auf elektrohydraulischem Weg zu betätigen (in Fig. 1 nicht dargestellt). Konkret kann die mit dem elektromechanischen Aktuator 26 zusammenwirkende Zylinder-Kolben-Einrichtung beispielsweise auslassseitig mit dem Kolben 20 des Hauptbremszylinders 16 derart fluidisch gekoppelt sein, dass ein bei Betätigung des Aktuators 26 erzeugter Hydraulikdruck in der Zylinder-Kolben-Einrichtung unmittelbar auf die der Hydraulikkammer 24 gegenüberliegende Stirnseite des Kolbens 20 einwirkt. Der Kolben 20 wird dann in Folge des auf den Kolben 20 einwirkenden Hydraulikdrucks in Längsbewegung versetzt. Der durch den elektromechanischen Aktuator 26 in der Zylinder-Kolben-Einrichtung erzeugte Hydraulikdruck kann zur alleinigen Betätigung des Kolbens 20 im Hauptbremszylinder 16 oder im Zuge einer Bremskraftverstärkung zur Unterstützung der mittels der mechanischen Stelleinrichtung 28 durchgeführten Kolbenbetätigung eingesetzt werden.

Der elektromechanische Aktuator 26 umfasst einen Elektromotor 30, der über ein Getriebe 32, 34 eingangsseitig auf den Kolben 20 wirkt. Der Elektromotor 30 und das Getriebe 32, 34 sind konzentrisch zueinander angeordnet, wobei das Getriebe 32, 34 beispielsweise als eine Mutter-/Spindelanordnung, die vorzugsweise einen Kugelumlauf aufweist, ausgebildet ist. Die Mutter 32 des Getriebes ist drehbar gelagert und die auf den Kolben 20 wirkende Spindel 34 des Getriebes ist drehgesichert gelagert, um Drehbewegungen des Elektromotors 30 in Längsbewegungen der Spindel 34 und somit der Kolben 18 und 20 umzusetzen. Allgemein kann das Getriebe 32, 34 dazu ausgebildet sein, Drehbewegungen des Elektromotors 30 in eine auf den Kolben 20 einwirkende Längsbewegung umzusetzen.

Die mechanische Stelleinrichtung 28 weist ein Betätigungsglied 36 auf, das konzentrisch zu dem Elektromotor 30 in Längsrichtung verschiebbar angeordnet ist. Das Betätigungsglied 36, das mit einem Bremspedal 38 gelenkig gekoppelt ist, vermag wie die Spindel 34 (und unabhängig hiervon) eingangsseitig auf den Kolben 20 zu wirken, um die Kolben 18 und 20 in Längsbewegung zu versetzen.

Mittels einer (nicht dargestellten) Koppel- bzw. Entkoppeleinrichtung ist schaltbar, ob ein Betätigen des Hauptbremszylinders 16 mittels des elektromechanischen Aktuators 26 und/oder der mechanischen Stelleinrichtung 28 erfolgt. Ist gemäß einer Implementierung die mechanische Stelleinrichtung 28 vollständig vom Hauptbremszylinder 16 entkoppelt, wird der Hauptbremszylinder 16 für einen "Brake-by-Wire"-Betrieb (Betriebsbrems-Modus) ausschließlich mittels des elektromechanischen Aktuators 26 betätigt. Dazu werden mittels zweier Sensoreinrichtungen 40 und 42 der vom Fahrer am Bremspedal 38 eingeleitete Betätigungsweg s und die zugehörige Betätigungskraft F erfasst. Ferner wird mittels einer (nicht dargestellten) Simulationseinrichtung bei Betätigung des Bremspedals 38 ein Pedalrückwirkungsverhalten bereitgestellt. Es ist darauf hinzuweisen, dass in alternativen Ausführungsformen eine oder beide der Sensoreinrichtungen 40 und 42 entfallen können.

In einer elektronischen Steuereinheit ECU werden der erfasste Betätigungsweg s und die zugehörige Betätigungskraft F ausgewertet, um die Bremsdruckanforderung (d.h. den Bremswunsch) des Fahrers zu bestimmen. In Abhängigkeit von der Bremsdruckanforderung nimmt die elektronische Steuereinheit ECU die elektrische Ansteuerung des Elektromotors 30 des elektromechanischen Aktuators 26 vor. Der beim Betätigen des Hauptbremszylinders 16 erzeugte Bremsdruck p wird mittels einer Sensoreinrichtung 44 erfasst und in der elektronischen Steuereinheit ECU zyklisch mit der Bremsdruckanforderung verglichen, um den Bremsdruck p zu regeln bzw. zu steuern. Da aufgrund der Tandemanordnung der Kolben 18 und 20 des Hauptbremszylinders 16 ein für beide Bremskreise I. und II. (im Wesentlichen) übereinstimmender Bremsdruck p erzeugt wird, ist zum Erfassen des Bremsdrucks p nur eine Sensoreinrichtung 44 erforderlich, die hier den in Bremskreis II. erzeugten Bremsdruck p erfasst.

Sollte ein Defekt des elektromechanischen Aktuators 26 auftreten, beispielsweise eine Störung in der elektrischen Ansteuerung des Elektromotors 30, oder ein Fehlverhalten einer der Sensoreinrichtungen 40 und 42 zur Bremswunscherkennung, wird mittels der (nicht dargestellten) Koppel- bzw. Entkoppeleinrichtung ein unmittelbares Betätigen des Hauptbremszylinders 16 in Abhängigkeit von einer Betätigung des Bremspedals 38 möglich, um einen Notbremsbetrieb (Rückfall-Modus) zu gewährleisten.

Wie geschildert, wirkt im Rückfall-Modus aufgrund des mechanischen Durchgriffs die am Bremspedal 38 vom Fahrer aufgebrachte Betätigungskraft unmittelbar auf den Hauptbremszylinder 16 ein. Mit anderen Worten wird das Bremspedal 38 über das Betätigungsglied 36 starr mit der dem Bremspedal 38 zugewandten Stirnseite des Zylinders 20 gekoppelt. In Abhängigkeit des Defekts oder Fehlverhaltens erfolgt hierbei zusätzlich eine Ansteuerung des elektromechanischen Aktuators 26 zur Bereitstellung einer additiven Bremskraftverstärkung. Hierzu später mehr.

In der hydraulischen Verbindung zum Hauptbremszylinder 16 ist jeder der Radbremsen VL, VR, HL und HR jeweils eine Ventilanordnung 46, 48, 50 und 52 zugeordnet. Die Ventilanordnungen 46, 48, 50 und 52 sind jeweils als elektromagnetisch betätigte 2/2-Wegeventile ausgestaltet, die im unbetätigten Zustand (wie dargestellt) geöffnet sind. Die elektrische Ansteuerung der Ventilanordnungen 46, 48, 50 und 52 erfolgt ebenfalls durch die elektronische Steuereinheit ECU.

Das Einstellen individueller Bremsdrücke in den einzelnen Radbremsen VL, VR, HL und HR, wie es unter anderem für eine Antiblockierregelung (ABS), eine Antriebsschlupfregelung (ASR), eine Fahrdynamikregelung (ESP) und dergleichen erforderlich ist, geschieht im vorliegenden Ausführungsbeispiel im Multiplexbetrieb.

Im Multiplexbetrieb erfolgt das Einstellen der individuellen Radbremsdrücke beispielsweise innerhalb von Multiplexzyklen Tz, die mit einer Zykluszeit in einer Größenordnung von typischerweise 10 ms aufeinanderfolgen. Dabei ist ein aktueller Multiplexzyklus Tz(n) entsprechend der Anzahl der zu betätigenden Radbremsen VL, VR, HL und HR in Zeitintervalle (von gleicher Zeitdauer) unterteilt, in denen nacheinander die für die Radbremsen VL, VR, HL und HR angeforderten Bremsdrücke vom Bremsdruckgeber 26 zentral eingestellt und mittels der der jeweiligen Radbremse VL, VR, HL und HR zugeordneten Ventilanordnung 46, 48, 50 und 52 bis zum nachfolgenden Multiplexzyklus Tz(n+1) gehalten werden. Folglich ergeben sich bei vier zu betätigenden Radbremsen VL, VR, HL und HR (wenigstens) vier Zeitintervalle.

Wie bereits erwähnt kann der Rückfall-Modus in unterschiedlichen Situation aktiviert werden, beispielsweise aufgrund einer Störung in der elektrischen Ansteuerung des Elektromotors 30 oder aufgrund eines Fehlverhaltens einer der Sensoreinrichtungen 40 und 42 zur Bremswunscherkennung. Sofern lediglich eine der Sensoreinrichtungen 40 und 42 ausfällt oder ein vergleichbarer Defekt vorliegt, bleibt der elektromechanische Aktuator 26 als solches betriebsfähig. Es ist daher in derartigen Fällen vorgesehen, den elektromechanischen Aktuator 26 zusätzlich zum mechanischen Durchgriff zu betreiben, um eine Bremskraftverstärkung bereitzustellen. Das bekannte Problem übermäßig langer Bremswege im Rückfall-Modus kann auf diese Weise gelöst werden.

Die hier vorgeschlagene Lösung beinhaltet eine Abschätzung des Fahrerwunsches (bei einem beispielhaften Defekt beider Sensoreinrichtungen 40 und 42) und eine darauf basierende Ermittlung der erforderlichen Bremskraftverstärkung. Der Abschätzung kann die Annahme eines bekannten Zusammenhangs zwischen der erforderlichen Bremskraftverstärkung und der vom Fahrer aufgebrachten (unbekannten) Betätigungskraft zugrunde liegen. Allgemein basiert die im vorliegenden Ausführungsbeispiel vorgeschlagene Lösung auf der Erkenntnis, dass dann, wenn das Ergebnis (z.B. Fahrzeugverzögerung oder Bremsdruck) zweier Aktionen und dazu eine der beiden Aktionen (z.B. die Bremskraftverstärkung) bekannt ist, auch die zweite der beiden Aktionen (z.B. die vom Fahrer aufgebrachte Betätigungskraft) ermittelt und daraus die erforderliche Bremskraftverstärkung ermittelt werden kann.

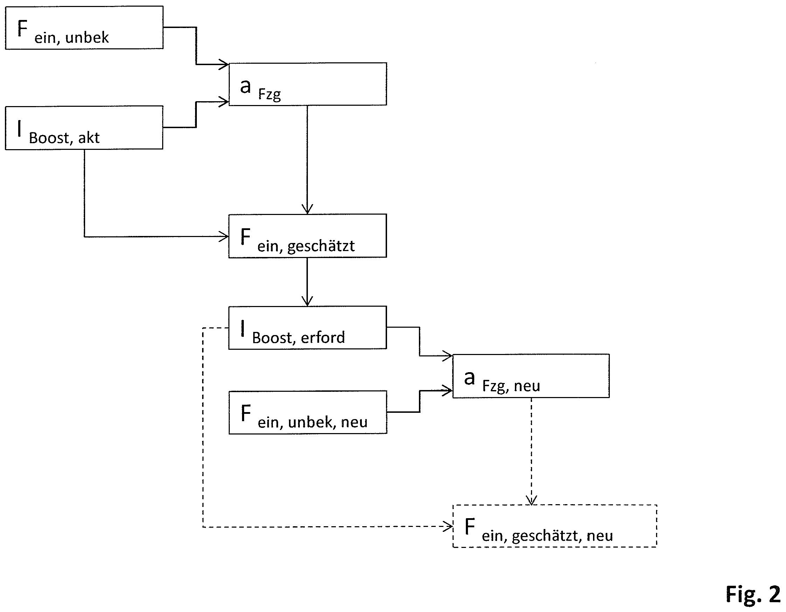

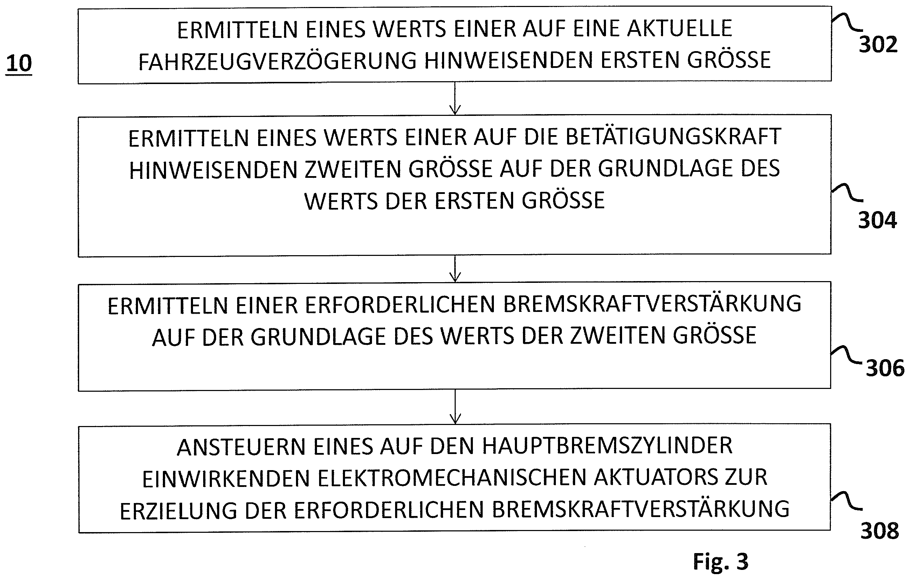

Dieser Sachverhalt wird nun unter Bezugnahme auf das schematische Ablaufdiagram gemäß Fig. 2 näher erläutert. In diesem Zusammenhang wird auch auf Fig. 3 Bezug genommen, die ein Ausführungsbeispiel eines Verfahrens zur Bremskraftverstärkung im Zusammenhang mit der Bremsanlage gemäß Fig. 1 veranschaulicht.

Die in Fig. 2 dargestellte Vorgehensweise kann dann gestartet werden, wenn beispielsweise im Rahmen eines Bremsvorgangs (also bei vom Steuergerät ECU angesteuertem elektromechanischen Aktuator 26) die Notwendigkeit erkannt wird, den Rückfall-Modus zu aktivieren, wobei gleichzeitig von einer weitergehenden Betriebsfähigkeit des elektromechanischen Aktuators 26 ausgegangen wird. Eine solche Situation kann beispielsweise bei Ausfall eines oder mehrerer der Sensoreinrichtungen 40, 42 zur Bremswunscherkennung vorliegen. In einem solchen Fall erfolgt bei Aktivierung des Rückfall-Modus auch eine Aktivierung des mechanischen Durchgriffs, wobei dann zumindest kurzzeitig die vom elektromechanischen Aktuator 26 (noch) bereitgestellte Bremskraftverstärkung und die auf den mechanischen Durchgriff zurückgehende Betätigungskraft additiv auf den Kolben 20 im Hauptbremszylinder 16 einwirken können. Es fällt jedoch die Eingangsgröße zur Ansteuerung des elektromechanischen Aktuators 26 fort und kann wie nachfolgend geschildert besetzt werden.

Gemäß Fig. 2 wird davon ausgegangen, dass die aktuelle Fahrzeugverzögerung $a_{Fzg}$ im Rückfall-Modus auf zwei Anteile zurückgeht, nämlich einerseits - aufgrund des mechanischen Durchgriffs - die (jetzt unbekannte) Betätigungskraft am Bremspedal 38 $F_{ein}$ und, andererseits, der (aktuell) vom elektromechanischen Aktuator 26 bereitgestellten Bremskraftverstärkung. Die Bremskraftverstärkung steht in einem bekannten Zusammenhang zur Stromaufnahme $I_{Boost}$ des elektromechanischen Aktuators 26.

Es wird ferner davon ausgegangen, dass auch ein bekannter Zusammenhang zwischen der aktuellen Bremskraftverstärkung (d.h. der Stromaufnahme $I_{Boost}$) einerseits und der vom Fahrer erzeugten Betätigungskraft $F_{ein}$ andererseits vorherrscht. Dieser bekannte Zusammenhang kann ein vorgegebener Verstärkungsfaktor sein. Beispielsweise kann die Bremsanlage 10 dazu eingerichtet sein, die Betätigungskraft $F_{ein}$ allgemein um einen Faktor 4 zu verstärken.

Die aktuelle Fahrzeugverzögerung $a_{pzg}$ kann beispielsweise über einen Beschleunigungs- oder Raddrehzahlsensor, über einen die Bewegung eines der Kolben 18, 20 erfassenden Wegsensors, über den Drucksensor 44 oder einen Bremskraftsensor ermittelt werden (Schritt 302 in Fig. 3). Die aktuelle Bremskraftverstärkung lässt sich wie oben dargelegt über die Stromaufnahme $I_{Boost}$ des elektromechanischen Aktuators 26 oder anderweitig ermitteln. Aus diesen Informationen lässt sich dann trotz Ausfall des Wegsensors 40 und/oder des Kraftsensors 42 die Betätigungskraft $F_{ein}$ - wie in Fig. 2 dargestellt - schätzen (Schritt 304 in Fig. 3).

Zum Schätzen der Betätigungskraft $F_{ein}$ wird die Kräftebilanz betrachtet, die sich an dem Kolben 20, der die Hydraulikkammer 24 begrenzt, an deren Ausgang die Sensoreinrichtung 44 zum Erfassen des Bremsdrucks p angeschlossen ist, einstellt. Diese ergibt sich aufgrund der in der Hydraulikkammer 24 erzeugten Hydraulikkraft Fp, der Betätigungskraft $F_{ein}$ und der von dem elektromechanischen Aktuator 26 bereitgestellten Verstärkungskraft $F_{Boost}$ zu:

$$F_p = F_{ein} + F_{Boost}$$

Daraus folgt die Betätigungskraft $F_{ein}$:

$$F_{ein} = F_p - F_{Boost}$$

Die Hydraulikkraft Fp ergibt sich als das Produkt aus dem mittels der Sensoreinrichtung 44 erfassten Bremsdruck p und der wirksamen Arbeitsfläche $A_{20}$ des Kolbens 20 als Konstanten:

$$F_p = A_{20} * p$$

Die Verstärkungskraft $F_{Boost}$ ergibt sich als als das Produkt aus der Stromaufnahme $I_{Boost}$ des Elektromotors 30 und der durch die Kennwerte des Elektromotors 30 und des Getriebes 32, 34 vorgegebenen Konstante $K_{30}$:

$$F_{Boost} = K_{30} * I_{Boost}$$

Damit kann die Eingangskraft $F_{ein}$ gemäß folgender Formel abgeschätzt bzw. berechnet werden:

$$F_{ein} = A_{20} * p - K_{30} * I_{Boost}$$

Aus der geschätzten Betätigungskraft $F_{ein}$ wiederum lässt sich aufgrund des bekannten Verstärkungsfaktors auf die für den nächsten Zyklus erforderliche Bremskraftverstärkung und die damit verbundene Stromaufnahme $I_{Boost}$ des elektromechanischen Aktuators 26 schließen. Diese Vorgehensweise entspricht Schritt 306 in Fig. 3. In einem weiteren Schritt 308 erfolgt dann eine Ansteuerung des elektromechanischen Aktuators 26 mittels des Steuergeräts ECU zur Erzielung der erforderlichen Bremskraftverstärkung.

Zwischenzeitlich wird der Fahrer die Betätigungskraft am Bremspedal 38 (in unbekannter Weise) geändert haben, so dass eine neue Betätigungskraft $F_{ein}$ anliegt. Dementsprechend stellt sich auch eine neue Fahrzeugverzögerung $a_{Fzg}$ ein. Auf der Grundlage der neuen Fahrzeugverzögerung $a_{Fzg}$ sowie der neu eingestellten Bremskraftverstärkung lässt sich dann in einem nächsten Zyklus - wie in Fig. 2 durch gestrichelte Linien angedeutet - die neue Betätigungskraft $F_{ein}$ schätzen.

Die in Fig. 2 dargestellten Schritte werden solange zyklisch wiederholt, bis ein Ende des Bremswunschs erkannt wurde (also die geschätzte Betätigungskraft bei Null oder nahe bei Null liegt).

Die in Fig. 2 skizzierte Vorgehensweise kann auch dann gestartet werden, wenn überhaupt keine Sensoreinrichtung 40, 42 zur Bremswunscherkennung vorhanden ist oder aber die entsprechende(n) Sensoreinrichtung(en) 40, 42 bereits im Vorfeld eines Bremsvorgangs ausgefallen sind. In diesem Fall wird einfach zu Beginn davon ausgegangen, dass die aktuelle Bremskraftverstärkung und die damit einhergehende Bestromung des elektromechanischen Aktuators 26 (d.h. I$_{Boost}$) gleich Null sind und die aktuelle Fahrzeugverzögerung demzufolge ausschließlich auf den mechanischen Durchgriff zurückzuführen ist.

Es versteht sich, dass die hier skizzierte Implementierung der Vorgehensweise gleichermaßen zur Bremskraftverstärkung bei einer Bremsanlage 10 geeignet ist, bei der stets ein mechanischer Durchgriff vorhanden ist. Auch bei solchen Bremsanlagen könnte daher auf eine oder beide der Sensoreinrichtung(en) 40 und 42 zur Bremswunscherkennung verzichtet werden.

Wie sich aus den geschilderten Ausführungsbeispielen ergibt, ermöglicht die hier vorgeschlagene Vorgehensweise die Aufrechterhaltung einer Bremskraftverstärkung auch in solchen Fällen, in denen herkömmlicherweise ein unverstärkter "Push-Through"-Betrieb im Rückfall-Modus erfolgen würde. Ein unnötiges oder vorsorgliches Abschalten des elektromechanischen Aktuators 26 kann daher ausgeschlossen werden. Insgesamt bleiben daher sehr wenige Fehlerfälle übrig, bei denen eine Bremskraftverstärkung nicht zur Verfügung steht und der Fahrer die gesamte Bremskraft selbst aufbringen muss. Die Alltagstauglichkeit von "Brake-By-Wire"-Systemen und Systemen zur elektrohydraulischen Bremskraftverstärkung wird auf diese Weise erhöht.

Das bekannte und gewohnte Pedalgefühl kann sich bei einer Implementierung der hier vorgeschlagenen Vorgehensweise ändern, insbesondere kann der Pedalweg in einem vertretbaren Maß länger werden. Dies ist jedoch vorteilhaft, da dem Fahrer auf diese Weise auch haptisch angezeigt wird, dass die Bremsanlage möglicherweise auf einen Fehler hin überprüft werden muss.

Abschließend sei noch erwähnt, dass anhand von Fig. 1 bis 3 beispielhaft ein praxisnahes Ausführungsbeispiel erläutert wurde. Es liegt deshalb im Ermessen eines Fachmanns, im Umfang der Ansprüche und der Beschreibung Abänderungen und Kombinationen vorzunehmen.

## Patentansprüche

1.  Verfahren zur Bremskraftverstärkung für eine elektrohydraulische Kraftfahrzeug-Bremsanlage (10) in einem Modus, in dem mittels eines mechanischen Durchgriffs eine Betätigungskraft an einem Bremspedal (38) auf einen Hauptbremszylinder (16) der Bremsanlage (10) einwirkt, umfassend die Schritte:

    Ermitteln eines Werts einer auf eine aktuelle Fahrzeugverzögerung hinweisenden ersten Größe;
    Ermitteln eines Werts einer auf die Betätigungskraft hinweisenden zweiten Größe auf der Grundlage des Werts der ersten Größe;
Ermitteln einer erforderlichen Bremskraftverstärkung auf der Grundlage des Werts der zweiten Größe; und
Ansteuern eines auf den Hauptbremszylinder (16) einwirkenden elektromechanischen Aktuators (26) zur Erzielung der erforderlichen Bremskraftverstärkung.

2.  Verfahren nach Anspruch 1, wobei die aktuelle Fahrzeugverzögerung auf eine Betätigungskraft am Bremspedal (38) und eine aktuellen Bremskraftverstärkung mittels des elektromechanischen Aktuators (26) zurückgeht.

3.  Verfahren nach Anspruch 2, wobei der Wert der zweiten Größe aus dem Wert der ersten Größe und der aktuellen Bremskraftverstärkung ermittelt wird, wobei die aktuelle Bremskraftverstärkung vorzugsweise aus einer Stromaufnahme des elektromechanischen Aktuators (26) ermittelt wird.

4.  Verfahren nach Anspruch 3 , wobei dem Ermitteln des Werts der zweiten Größe die Annahme eines bekannten Zusammenhangs zwischen der aktuellen Bremskraftverstärkung und der Betätigungskraft zugrunde liegt.

5.  Verfahren nach einem der vorhergehenden Ansprüche, wobei dem Ermitteln der erforderlichen Bremskraftverstärkung die Annahme eines bekannten Zusammenhangs zwischen der erforderlichen Bremskraftverstärkung und der zweiten Größe zugrunde liegt.

6.  Verfahren nach einem der vorhergehenden Ansprüche, wobei die erste Größe die Fahrzeugverzögerung selbst, ein von einem Kolben (18, 20) im Hauptbremszylinder (16) zurückgelegter Weg, ein Hydraulikdruck in der Bremsanlage (10) oder eine Gesamtbremskraft ist; und/oder wobei die zweite Größe die Betätigungskraft selbst, ein auf die Betätigungskraft zurückgehender Hydraulikdruckanteil in der Bremsanlage (10) oder ein auf die Betätigungskraft zurückgehender Bremskraftanteil ist.

7.  Verfahren nach einem der vorhergehenden Ansprüche, wobei die Schritte wiederholt während eines Bremsvorgangs durchgeführt werden.

8.  Verfahren nach einem der vorhergehenden Ansprüche, wobei der Modus während eines laufenden Bremsvorgangs aktiviert wird.

9. Verfahren nach einem der vorhergehenden Ansprüche,
   wobei der Modus ein Rückfall-Modus ist und in einem regulären Betriebsmodus das Bremspedal (38) vom Hauptbremszylinder (16) entkoppelt und eine Bremskraft allein von dem elektromechanischen Aktuator (26) erzeugt wird.

10. Verfahren nach einem der vorhergehenden Ansprüche,
    wobei das Verfahren als Antwort auf einen Ausfall eines Sensors (40, 42) zur Bremswunscherkennung durchgeführt wird, wobei das Verfahren insbesondere als Antwort auf den Ausfall eines Pedalwegsensors (40) durchgeführt wird.

11. Computerprogrammprodukt mit Programmcodemitteln zur Durchführung des Verfahrens nach einem der vorhergehenden Ansprüche, wenn das Verfahren auf einem Steuergerät (ECU) abläuft.

12. Steuergerät (ECU), umfassend das Computerprogrammprodukt nach Anspruch 11.

13. Elektrohydraulische Betätigungsbaugruppe für eine Kraftfahrzeug-Bremsanlage (10), umfassend
    einen Hauptbremszylinder (16);
    einen elektromechanischen Aktuator (26) wenigstens zur Bremskraftverstärkung, wobei der elektromechanische Aktuator (26) auf den Hauptbremszylinder (16) einwirkt;
    eine Einrichtung (28), die mittels eines mechanischen Durchgriffs eine Übertragung einer Betätigungskraft an einem Bremspedal auf den Hauptbremszylinder (16) gestattet; und
    ein Steuergerät (ECU), welches dazu ausgelegt ist,

    - einen Wert einer auf eine aktuelle Fahrzeugverzögerung hinweisenden ersten Größe zu ermitteln;
    - einen Wert einer auf die Betätigungskraft hinweisenden zweiten Größe auf der Grundlage des Werts der ersten Größe zu ermitteln;
    - eine erforderliche Bremskraftverstärkung auf der Grundlage des Werts der zweiten Größe zu ermitteln; und
    - den elektromechanischen Aktuators (26) zur Erzielung der erforderlichen Bremskraftverstärkung anzusteuern.

14. Betätigungsbaugruppe nach Anspruch 13,
    wobei die Einrichtung (28) zum Betrieb in einem Rückfall-Modus ausgelegt ist und die Betätigungsbaugruppe eingerichtet ist, in einem regulären Betriebsmodus das Bremspedal (38) vom Hauptbremszylinder (16) zu entkoppeln und eine Bremskraft allein durch den elektromechanischen Aktuator (26) zu erzeugen.

15. Betätigungsbaugruppe nach Anspruch 13 oder 14,
    wobei die Betätigungsbaugruppe ohne Sensor zur Bremswunscherkennung ausgebildet ist.

## Claims

1. A method for boosting brake force for an electrohydraulic motor vehicle brake system (10) in a mode in which an actuating force on a brake pedal (38) acts upon a brake master cylinder (16) of the brake system (10) by means of a mechanical push-through, comprising the steps:

   determining a value of a first variable that is indicative of a current vehicle deceleration;
   on the basis of the value of the first variable, determining a value of a second variable that is indicative of the actuating force;
   on the basis of the value of the second variable, determining a required brake force boost; and
   controlling an electromechanical actuator (26), which acts upon the master cylinder (16), to achieve the required brake force boost.

2. The method according to Claim 1,
   wherein the current vehicle deceleration results from an actuating force on the brake pedal (38) and a current brake force boost by means of the electromechanical actuator (26).

3. The method according to Claim 2,
   wherein the value of the second variable is determined from the value of the first variable and the current brake force boost, wherein the current brake force boost is determined from an electric current consumption of the electromechanical actuator (26)

4. The method according to Claim 3,
   wherein the determination of the value of the second variable is based on the assumption of a known relationship between the current brake force boost and the actuating force.

5. The method according to any one of the preceding claims,
   wherein the determination of the required brake force boost is based on the assumption of a known relationship between the required brake force boost and the second variable.

6. The method according to any one of the preceding claims,
   wherein the first variable is the vehicle deceleration itself, a distance traveled by a piston (18, 20) in the brake master cylinder (16), a hydraulic pressure in the brake system (10) or a total brake force; and/or wherein the second variable is the actuating force itself, a hydraulic pressure component in the brake system (10) that results from the actuating force, or a brake force component that results from the actuating force.

7. The method according to any one of the preceding claims,
   wherein the steps are performed repeatedly during a braking operation.

8. The method according to any one of the preceding claims,
   wherein the mode is activated during an ongoing braking operation.

9. The method according to any one of the preceding claims,
   wherein the mode is a fallback mode and, in a regular operating mode, the brake pedal (38) is decoupled from the master cylinder (16) and a brake force being generated solely by the electromechanical actuator (26).

10. The method according to any one of the preceding claims,
    wherein the method is performed as a response to a failure of a sensor (40, 42) for detection of a braking request, wherein the method is in particular performed as a response to the failure of a pedal travel sensor (40)

11. A computer program product having program code means for performing the method according to any one of the preceding claims, when the method is executed on a control unit (ECU).

12. A control unit (ECU), comprising the computer program product according to Claim 11.

13. An electrohydraulic actuating assembly for a motor vehicle brake system (10), comprising
    a master cylinder (16);
    an electromechanical actuator (26) at least for boosting brake force, the electromechanical actuator (26) acting upon the master cylinder (16);
    a component (28) that, by means of a mechanical push-through, enables an actuating force on a brake pedal to be transmitted to the master cylinder (16); and
    a control unit (ECU), which is configured

    - to determine a value of a first variable that is indicative of a current vehicle deceleration;
    - to determine, on the basis of the value of the first variable, a value of a second variable that is indicative of the actuating force;
    - to determine, on the basis of the value of the second variable, a required brake force boost; and
    - to control the electromechanical actuator (26) to achieve the required brake force boost.

14. The actuating assembly according to Claim 13, wherein the component (28) is configured for operating in a fallback mode, and the actuating assembly is configured, in a regular operating mode, to decouple the brake pedal (38) from the master cylinder (16), and to generate a brake force solely by means of the electromechanical actuator (26).

15. The actuating assembly according to Claim 13 or 14, wherein the actuating assembly is realized without a sensor for detection of a braking request.

## Revendications

1. Procédé d'assistance au freinage pour un système de freinage électro-hydraulique (10) de véhicule automobile dans un mode dans lequel une force d'actionnement appliquée par une action mécanique sur une pédale de frein (38) agit sur un maître-cylindre (16) du système de freinage (10), comprenant les étapes suivantes :

   la détermination d'une valeur d'une première grandeur indiquant une décélération actuelle du véhicule;
   la détermination d'une valeur d'une deuxième grandeur indiquant la force d'actionnement sur la base de la valeur de la première grandeur;
   la détermination d'une assistance au freinage nécessaire sur la base de la valeur de la deuxième grandeur; et
   la commande d'un actionneur (26) électromécanique agissant sur le maître-cylindre (16) pour obtenir l'assistance au freinage requise.

2. Procédé selon la revendication 1,
   la décélération actuelle du véhicule résultant d'une force d'actionnement sur la pédale de frein (38) et d'une assistance au freinage actuelle au moyen de l'actionneur (26) électromécanique.

3. Procédé selon la revendication 2,
   la valeur de la deuxième grandeur étant déterminée à partir de la valeur de la première grandeur et à partir de l'assistance au freinage actuelle, l'assistance au freinage actuelle étant préférentiellement déterminée à partir d'une consommation électrique de l'actionneur (26) électromécanique.

4. Procédé selon la revendication 3,

la détermination de la valeur de la deuxième grandeur étant effectuée sur la base de l'hypothèse selon laquelle il existe un lien connu entre l'assistance au freinage actuelle et la force d'actionnement.

5. Procédé selon l'une des revendications précédentes,

la détermination de la valeur de la force d'actionnement requise étant effectuée sur la base de l'hypothèse selon laquelle il existe un lien connu entre l'assistance au freinage requise et la deuxième grandeur.

6. Procédé selon l'une des revendications précédentes,

la première grandeur étant la décélération du véhicule elle-même, une course parcourue par un piston (18, 20) à l'intérieur du maître-cylindre (16), une pression hydraulique dans le système de freinage (10) ou une force de freinage totale; et/ou la deuxième grandeur étant la force d'actionnement elle-même, une part de la pression hydraulique dans le système de freinage (10) due à la force d'actionnement ou une part de la force de freinage due à la force d'actionnement.

7. Procédé selon l'une des revendications précédentes,

lesdites étapes étant répétées pendant une opération de freinage.

8. Procédé selon l'une des revendications précédentes,

ledit mode étant activé pendant une opération de freinage en cours.

9. Procédé selon l'une des revendications précédentes,

le mode étant un mode d'urgence et la pédale de frein (38) étant désaccouplée du maître-cylindre (16) dans un mode de fonctionnement normal et une force de freinage étant générée exclusivement par l'actionneur (26) électromécanique.

10. Procédé selon l'une des revendications précédentes,

le procédé étant exécuté en tant que réponse à une panne d'un détecteur (40, 42) destiné à reconnaître le souhait de freinage du conducteur, le procédé étant plus particulièrement exécuté en tant que réponse à la panne d'un détecteur de course de pédale (40).

11. Produit programme d'ordinateur avec des moyens de code de programme pour faire s'exécuter ledit procédé selon l'une des revendications précédentes lorsque le procédé est exécuté sur un dispositif de commande (ECU).

12. Dispositif de commande (ECU), comprenant le produit programme d'ordinateur selon la revendication 11.

13. Sous-ensemble d'actionnement électro-hydraulique pour un système de freinage de véhicule (10), comprenant

un maître-cylindre (16);
un actionneur (26) électromécanique au moins pour l'assistance au freinage, l'actionneur (26) électromécanique agissant sur le maître-cylindre (16);
un dispositif (28) permettant la transmission à un maître-cylindre (16) d'une force d'actionnement appliquée par une action mécanique sur une pédale de frein (38); et
un dispositif de commande (ECU) qui est conçu

- pour déterminer une valeur d'une première grandeur indiquant une décélération actuelle du véhicule;
- pour déterminer une valeur d'une deuxième grandeur indiquant la force d'actionnement sur la base de la valeur d'une première grandeur;
- pour déterminer une assistance au freinage nécessaire sur la base de la valeur de la deuxième grandeur; et
- pour commander l'actionneur (26) électromécanique afin d'obtenir l'assistance au freinage requise.

14. Sous-ensemble d'actionnement selon la revendication 13,

ce dispositif (28) étant conçu pour fonctionner dans un mode d'urgence et l'ensemble d'actionnement étant conçu pour désaccoupler la pédale de frein (38) du maître-cylindre (16) dans un mode de fonctionnement normal et pour générer exclusivement à l'aide de l'actionneur (26) électromécanique une force de freinage.

15. Sous-ensemble d'actionnement selon la revendication 13 ou 14,

ce sous-ensemble d'actionnement étant réalisé sans détecteur pour la reconnaissance du souhait de freinage du conducteur.

Fig. 1

$F_{ein, unbek}$

$I_{Boost, akt}$

$a_{Fzg}$

$F_{ein, geschätzt}$

$I_{Boost, erford}$

$F_{ein, unbek, neu}$

$a_{Fzg, neu}$

$F_{ein, geschätzt, neu}$

**Fig. 2**

EP 2 934 972 B1

**10**

| ERMITTELN EINES WERTS EINER AUF EINE AKTUELLE FAHRZEUGVERZÖGERUNG HINWEISENDEN ERSTEN GRÖSSE | 302 |

↓

| ERMITTELN EINES WERTS EINER AUF DIE BETÄTIGUNGSKRAFT HINWEISENDEN ZWEITEN GRÖSSE AUF DER GRUNDLAGE DES WERTS DER ERSTEN GRÖSSE | 304 |

↓

| ERMITTELN EINER ERFORDERLICHEN BREMSKRAFTVERSTÄRKUNG AUF DER GRUNDLAGE DES WERTS DER ZWEITEN GRÖSSE | 306 |

↓

| ANSTEUERN EINES AUF DEN HAUPTBREMSZYLINDER EINWIRKENDEN ELEKTROMECHANISCHEN AKTUATORS ZUR ERZIELUNG DER ERFORDERLICHEN BREMSKRAFTVERSTÄRKUNG | 308 |

**Fig. 3**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102004016141 A1
- DE 102011081461 A1